# EUROPEAN PATENT SPECIFICATION

(11) **EP 1 890 877 B1**
(45) Date of publication and mention of the grant of the patent: **13.01.2016**
(21) Application number: 06772630.7
(22) Date of filing: 07.06.2006
(51) Int. Cl.: B32B 27/32, B32B 27/08, C08L 23/08, B65D 75/00, C08J 5/18, B65D 75/46

(54) **FILMS HAVING A COMBINATION OF HIGH IMPACT STRENGTH AND HIGH SHRINK**
FILME MIT EINER KOMBINATION AUS HOHER SCHLAGZÄHFESTIGKEIT UND HOHEM SCHRUMPF
FILMS PRESENTANT A LA FOIS UNE HAUTE RESISTANCE AU CHOC ET UN RETRAIT ELEVE

(30) Priority: 17.06.2005 US 155270
(43) Date of publication of application: 27.02.2008
(73) Proprietor: Cryovac, Inc., Duncan, South Carolina 29334 (US)
(72) Inventor: BROADUS, Michael, E., Mauldin, SC 29662 (US); DAWE, Matthew, D., Simpsonville, SC 29681 (US)
(74) Representative: Jackson, Martin Peter
(86) International application number: PCT/US2006/022390
(87) International publication number: WO 2006/138152

(56) References cited:
- EP-A- 1 541 493
- EP-A2- 0 597 502
- EP-A2- 1 095 874
- WO-A-2004/111123
- US-A1- 2002 106 429
- US-A1- 2003 215 659
- US-A1- 2004 118 735
- US-B1- 6 610 392

## Description

### Field of the Invention

The present invention relates to multilayer heat-shrinkable films suitable for packaging end-use.

### Background of the Invention

For some time, various meat products, including smoked and processed meats, fresh red meat, poultry, etc., have been packaged in multilayer, heat shrinkable barrier films made primarily from ethylene-based polymers. While such films can be made to provide relatively high shrink at relatively low temperature, there is a need for improved films in which the desired high level of shrink is combined with improved impact strength.

### Summary of the Invention

The present invention is directed to films which exhibit an improved combination of shrink and impact strength. The improved combination of properties is achieved through the use of a particular combination of ethylene-based copolymers. The ethylene-based copolymers are present in the film in a blend.

In one embodiment, the present invention is directed to a multilayer film comprising a first layer comprising a blend of: a first ethylene/alpha-olefin copolymer having a M_{w}/Mₙ of from 1 to 3.0 and a density of from 0.91 g/cc to 0.925 g/cc, the first ethylene/alpha-olefin copolymer having a first melting point of from 85°C to 110°C and a second melting point of from 111°C to 125°C; and a second ethylene/alpha-olefin copolymer having an Mw/Mn greater than 3.0 and a density of from 0.90 to 0.91 g/cc; wherein the first ethylene/alpha-olefin copolymer comprises from 5 to 40 weight percent of the blend, and the second ethylene/alpha-olefin comprises from 60 to 95 weight percent of the blend, and wherein the total amount of the blend in the first layer and in any other layers of the film comprises from 40 to 99 weight percent of the total weight of the multilayer film, with the multilayer film having a total free shrink at 85°C as determined by ASTM D 2732 of at least 60 percent and a peak load impact strength of at least 5300 N/mm (135 Newtons per mil), with the multilayer film further comprising a second layer comprising a thermoplastic polymer.The first ethylene/alpha-olefin copolymer preferably comprises (i.e., makes up) from about 10 to about 30 weight percent of the blend, and the second ethylene/alpha-olefin preferably comprises (i.e., makes up) from about 70 to about 90 weight percent of the blend. The blend may be present in one or more layers of the film and in at least one preferred embodiment is used in two internal layers of the film. Where the blend is present in more than one layer of the film, the blend in one layer can be the same as that of the other layer or layers, or the respective blends may be different, e.g., in the weight proportion or chemical structure of the first and second polymers. Whether present in one layer or in more than one layer in the multilayer film, the total amount of blend in the film is preferably from about 40 to about 80 weight percent. The multilayer film preferably has a total free shrink at 85°C of from about 70 to about 120 percent, and a peak load impact strength of from 5300 N/mm (135 Newtons per mil) to about 7000 N/mm (170 Newtons per mil)). The multilayer film preferably comprises at least one other layer that comprises a thermoplastic polymer.

### Brief Description of the Drawings

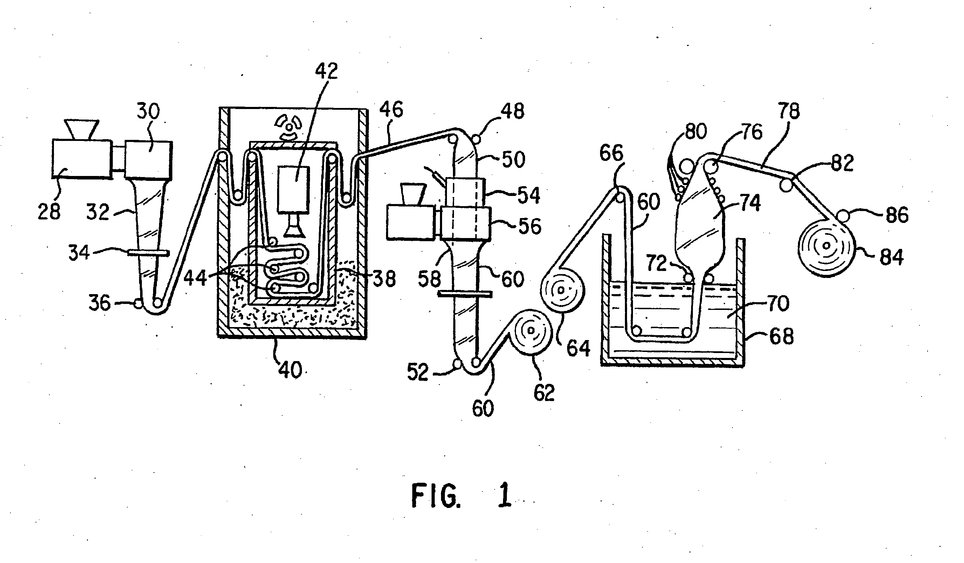

Figure 1 illustrates a schematic view of a preferred process for making a multilayer film of the present invention.

### Detailed Description of the Invention

As used herein, the term "film" is used in a generic sense to include plastic web, regardless of whether it is film or sheet. Preferably, films of and used in the present invention have a thickness of 0.25 mm or less. As used herein, the phrase "packaging article" refers to an article useful in the packaging of a product, e.g., a bag, pouch, casing, lidstock, tray, etc. Packaging films are typically converted into packaging articles.

As used herein, the phrase "melt point" and "melting point" are used with reference to polymer crystalline melting point(s) as determined using differential scanning calorimetry ("DSC"), in accordance with ASTM 3418. Melting points are recorded from a second heating curve, recorded after controlled recrystallization of a polymer sample and a hold at the lowest temperature for 10 minutes. Cooling and heating curves are performed at a rate of 10°C per minute. Reported melting points are peak temperatures from the DSC baseline, calculated from a plot of heat flow versus temperature.

As used herein, the phrase "oriented film" refers to a polymer-containing film which has been stretched at an elevated temperature (the orientation temperature), followed by being "set" in the stretched configuration by cooling the material while substantially retaining the stretched dimensions. Upon subsequently heating unrestrained, oriented polymer-containing material to its orientation temperature, heat shrinkage is produced almost to the original unstretched, i.e., pre-oriented dimensions. More particularly, the term "oriented", as used herein, refers to oriented films.

As used herein, the phrase "orientation ratio" refers to the multiplication product of the extent to which the plastic film material is expanded in several directions at the orientation temperature, usually two directions perpendicular to one another. Orientation in two directions perpendicular to one another is referred to as "biaxial orientation". Expansion in the machine direction is herein referred to as "drawing", whereas expansion in the transverse direction is herein referred to as "stretching". For films extruded through an annular die, stretching is obtained by "blowing" the film to produce a bubble. For such films, drawing is obtained by passing the film through two sets of powered nip rolls, with the downstream set having a higher surface speed than the upstream set, with the resulting draw ratio being the surface speed of the downstream set of nip rolls divided by the surface speed of the upstream set of nip rolls.

In the making of a biaxially oriented film, a thick cast tape extrudate can be stretched ' (i.e., transversely) in a ratio of from about 1:1.5 - 1:6, and drawn in a ratio of from about 1:1.5-1:6; or the stretching and drawing can be carried out at a ratio of from about 1:2 - 1:4. The result is a biaxial orientation of from about 1:2.25 - 1:36, more preferably, 1:4 - 1:16. A 1:9 orientation ratio can also be used.

As used herein, the phrases "heat-shrinkable film" and "heat shrink film" are used with reference to films which have undergone orientation in the solid state, in a manner so that the film exhibits a total free shrink at 85°C (85°C =185°F) of at least 10 percent. Hot blown films are oriented in the melt state (not the solid state), and thereby exhibit a total free shrink at 85°C of less than 10 percent.

Solid state orientation can be carried out by orienting a relatively thick (i.e., 0.28 mm (1 mils) in thickness to 1.27 mm or more (50 or more mils) in thickness) cast extrudate, typically referred to as a "tape", after heating the tape to a temperature above the glass transition temperature but below the melting point, usually using hot water, infrared radiation, and/or steam. Annular tapes are typically oriented in the solid state using a trapped bubble, as illustrated in FIG. 1, described below. Transverse solid state orientation is imparted by stretching the diameter of the tape to the diameter of the trapped bubble. Machine direction (i.e., longitudinal) solid state orientation is imparted by running the nip rollers immediately downstream of the trapped bubble at a faster speed than the nip rollers immediately upstream of the trapped bubble. A flat sheet tape extrudate, for example a flat sheet cast from a slot die onto a chilled roller, can be heated to its softening point (but below its melting point) and monoaxially or biaxially oriented in the solid state using a tenter frame.

The heat shrinkable multilayer film of the present invention preferabley has a total free shrink (i.e., free shrink in the machine direction plus free shrink in the transverse direction) of from about 70 percent to about 120 percent, or from about 80 to about 100 percent, or from about 80 to 90 percent. Free shrink is measured in accordance with ASTM D 2732, which is hereby incorporated in its entirety, by reference thereto.

As used herein, the phrase "heterogeneous copolymer" refers to a polymerization reaction product of relatively wide variation in molecular weight and relatively wide variation in composition distribution, e.g., polymers prepared using conventional Ziegler-Natta catalysts. Heterogeneous copolymers typically contain a relatively wide variety of chain lengths and comonomer percentages. Heterogeneous polymers exhibit a molecular weight distribution (i.e., Mw/Mn) of greater than 3 (e.g., from 3.01 to 50).

As used herein, the phrase "homogeneous copolymer" refers to a polymerization reaction product of relatively narrow molecular weight distribution and relatively narrow composition distribution. The Mw/Mn of the homogeneous copolymer useful in the blend utilized in the present invention is up to 3.0, i.e., less than or equal to 3.0. Homogeneous copolymers are structurally different from heterogeneous copolymers, in that homogeneous polymers exhibit a relatively even sequencing of comonomers within a chain, a mirroring of sequence distribution in all chains, and a similarity of length of all chains, i.e., a narrower molecular weight distribution. Furthermore, homogeneous polymers are typically prepared using metallocene, or other single-site type catalysis, rather than using Ziegler Natta catalysts.

More particularly, homogeneous ethylene/alpha-olefin copolymers may be characterized by one or more properties known to those of skill in the art, such as molecular weight distribution (Mw/Mn), composition distribution breadth index (CDBI). Many homogeneous copolymers have a narrow melting point range and single melt point behavior. However, other more recently developed homogeneous copolymers have two or more melting points.

The molecular weight distribution (Mw/Mn), also known as polydispersity, may be determined by gel permeation chromatography. The homogeneous ethylene/alpha-olefin copolymers useful in this invention generally has (Mw/Mn) of up to 3.0; preferably from about 2 to about 2.5; more preferably, from about 2.2 to about 2.4.

The composition distribution breadth index (CDBI) of such homogeneous ethylene/alpha-olefin copolymers can be greater than about 70 percent. The CDBI is defined as the weight percent of the copolymer molecules having a comonomer content within 50 percent (i.e., plus or minus 50%) of the median total molar comonomer content. The CDBI of linear polyethylene, which does not contain a comonomer, is defined to be 100%. The' Composition Distribution Breadth Index (CDBI) is determined via the technique of Temperature Rising Elution Fractionation (TREF). CDBI determination clearly distinguishes the homogeneous copolymers (narrow composition distribution as assessed by CDBI values generally above 70%, preferably from 70% to 99%) from VLDPEs (which are Ziegler Natta catalyzed) available commercially which generally have a broad composition distribution as assessed by CDBI values generally less than 55%. TREF is described, for example, in Wild et. al., J. Poly. Sci. Poly. Phys. Ed., Vol. 20, p.441 (1982).

The first homogeneous ethylene/alpha-olefin copolymer present in the blend used in the present invention is bimodal in that it has two melting points. However, because it has a Mw/Mn of up to 3.0, it is still considered to be a homogeneous ethylene/alpha-olefin copolymer. Such homogeneous ethylene/alpha-olefin copolymers having two melting points include various Exceed^{®} copolymers available from the Exxon Chemical Company, as well as various Elite^{®} copolymers available from The Dow Chemical Company. While Exceed^{®} copolymers are believed to be linear copolymers, Elite^{®} copolymers are believed to have at least some long chain branching.

A homogeneous ethylene/alpha-olefin copolymer can be prepared by the copolymerization of ethylene and any one or more alpha-olefin. The alpha-olefin can be a C₃-C₂₀ alpha-monoolefin, a C₄-C₁₂ alpha-monoolefin, or a C₄-C₈ alpha-monoolefin. The alpha-olefin can comprise at least one member selected from the group consisting of 1-butene, 1-hexene, and 1-octene.

As used herein, the phrase "ethylene/alpha-olefin copolymer" includes such materials as linear low density polyethylene (LLDPE), and very low and ultra low density polyethylene (VLDPE and ULDPE), and homogeneous copolymers such as metallocene-catalyzed polymers such as Exact^{®} and Exceed^{®} resins obtainable from the Exxon Chemical Company, and TAFMER^{®} resins obtainable from the Mitsui Petrochemical Corporation. All these materials generally include copolymers of ethylene with one or more comonomers selected from C₄ to C₁₀ alpha-olefin such as butene, hexene, octene, etc. in which the molecules of the copolymers comprise long chains with relatively few side chain branches or cross-linked structures. This molecular structure is to be contrasted with conventional low or medium density polyethylenes which are more highly branched than their respective counterparts. The heterogeneous ethylene/alpha-olefins commonly known as LLDPE have a density usually in the range of from about 0.91 grams per cubic centimeter to about 0.94 grams per cubic centimeter. Other ethylene/alpha-olefin copolymers, such as the long chain branched homogeneous ethylene/alpha-olefin copolymers available from the Dow Chemical Company, known as Affinity^{®} and Elite^{®} resins, are also included as another type of homogeneous ethylene/alpha-olefin copolymer.

Ethylene/alpha-olefin copolymer is made by copolymerization of from about 80 to 99 weight percent ethylene and from 1 to 20 weight percent alpha-olefin. Preferably, the ethylene/alpha-olefin copolymer comprises a copolymer resulting from the copolymerization of from about 85 to 95 weight percent ethylene and from 5 to 15 weight percent alpha-olefin.

As used herein, the phrases "seal layer", "sealing layer", "heat seal layer", and "sealant layer", refer to an outer film layer involved in the sealing of the film to itself, the other outer layer of the same film, or another film, and/or another article which is not a film. Although only an outer film layer can be considered to be a seal layer, it should also be recognized that in general, up to the outer 0.076 mm (3 mils) of a film can affect the quality and strength of the seal.

As used herein, the term "barrier", and the phrase "barrier layer", as applied to films and/or film layers, is used with reference to the ability of a film or film layer to serve as a barrier to one or more gases. In the packaging art, oxygen (i.e., gaseous O₂) barrier layers contain one or more polymers which present a barrier to O₂. Such polymers include ethylene/vinyl alcohol copolymer, polyvinyl chloride, polyvinylidene chloride (particularly vinylidene chloride/methyl acrylate copolymer and/or vinylidene chloride/vinyl chloride copolymer), polyamide, polyester, polyacrylonitrile, etc., as known to those of skill in the art.

As used herein, "EVOH" refers to ethylene/vinyl alcohol copolymer. EVOH includes saponified or hydrolyzed ethylene/vinyl acetate copolymer. EVOH can be prepared by hydrolysis of ethylene/vinyl acetate copolymer. The degree of hydrolysis is preferably at least about 50%, more preferably at least about 85%.

As used herein, the phrase "abuse layer", as well as the phrase "puncture-resistant layer", refer to a film layer which resists abrasion, puncture, and other potential causes of reduction of package integrity and/or reduction of package appearance.

As used herein, the term "core", and the phrase "core layer", as applied to multilayer films, refer to any internal film layer which has a primary function other than serving as an adhesive or compatibilizer for adhering two layers to one another. Usually, the core layer or layers provide the multilayer film with a desired level of strength, i.e., modulus, and/or optics, and/or added abuse resistance, and/or specific impermeability.

As used herein, the phrase "skin layer" refers to an outside layer of a multilayer film which is packaging a product The skin layer is subject to direct abuse from the environment external to the package.

As used herein, the phrase "tie layer" refers to any internal layer having the primary purpose of adhering two layers to one another. Tie layers can comprise any polymer having a polar group grafted thereon, so that the polymer is capable of covalent bonding to polar polymers such as polyamide and ethylene/vinyl alcohol copolymer. Anhydride modified LLDPE (e.g., anhydride grafted LLDPE) is frequently used as a tie layer.

As used herein, the phrase "bulk layer" refers to any layer of a film which is present for the purpose of increasing the abuse-resistance, toughness, modulus, etc., of a multilayer film. Bulk layers are preferably made from one or more polymers which are relatively inexpensive but which provide toughness, puncture resistance, impact strength, and abrasion resistance.

As used herein, the phrases "inner layer" and "internal layer" refer to any layer, of a multilayer film, having both of its principal surfaces directly adhered to another layer of the film.

As used herein, the phrase "outer layer" refers to any film layer of film having less than two of its principal surfaces directly adhered to another layer of the film. The phrase is inclusive of monolayer and multilayer films. A multilayer film has two outer layers, each of which has a principal surface adhered to only one other layer of the multilayer film. A monolayer film has only one layer, which has neither of its two principal surfaces are adhered to another layer of the film.

As used herein, the phrase "inside layer" refers to the outer layer of a multilayer film packaging a product, which is closest to the product, relative to the other layers of the multilayer film. "Inside layer" also is used with reference to the innermost layer of a plurality of concentrically arranged layers simultaneously coextruded through an annular die.

As used herein, the phrase "outside layer" refers to the outer layer of a multilayer film packaging a product, this outer layer being the layer which is furthest from the product relative to the other layers of the multilayer film. Likewise, the "outside surface" of a bag is the surface away from the product being packaged within the bag. "Outside layer" also is used with reference to the outermost layer of a plurality of concentrically arranged layers simultaneously coextruded through an annular die.

As used herein, the term "adhered" is inclusive of films which are directly adhered to one another using a heat seal or other means, as well as films which are adhered to one another using an adhesive which is between the two films.

As used herein, the phrase "directly adhered", as applied to film layers, is defined as adhesion of the subject film layer to the object film layer, without a tie layer, adhesive, or other layer therebetween. In contrast, as used herein, the word "between", as applied to a film layer expressed as being between two other specified layers, includes both direct adherence of the subject layer between to the two other layers it is between, as well as including a lack of direct adherence to either or both of the two other layers the subject layer is between, i.e., one or more additional layers can be imposed between the subject layer and one or more of the layers the subject layer is between.

The multilayer film of the present invention can have any desired number of layers, such as from 2 to 20 layers, or from 2 to 12 layers, or-from 4 to 12 layers.

As used herein, the term "bag" is inclusive of end-seal bags, side-seal bags, Seal bags, backseamed bags, and pouches. An end-seal bag is made from a seamless tubing and has an open top, seamless (i.e.., folded, unsealed) side edges, and a transverse bottom seal in which the inside layer of the seamless tubing is heat sealed to itself. End-seal bags usually have a short "skirt" below the end seal. A side-seal bag has a an open top, a seamless bottom edge, with each of its two side edges having a seal therealong. An L-seal bag has an open top, a bottom seal, one side-seal along a first side edge, and a seamless (i.e., folded, unsealed) second side edge. Although heat seals along the side edges and/or bottom edges can be at the very edge itself, (i.e., seals of a type commonly referred to as "trim seals"), preferably heat seals are spaced inward (for example, 6-12 mm (1/4 to 1/2 inch), more or less) from the bag edges, and preferably are made using a impulse-type heat sealing apparatus, which utilizes a bar which is quickly heated and then quickly cooled. A backseamed bag is a bag having an open top, two seamless side edges, a bottom seal along a bottom edge of the bag, and a seal running the length of the bag in which the bag film is either fin-sealed or lap-sealed. The backseam seal running the length of a backseamed bag is generally in the middle of one lay-flat side of the bag. A pouch is a bag made from two separate pieces of film heat sealed together to provide an open top, a transverse seal along the bottom, and a seal along each side edge. A "lay-flat bag" is a bag which has no gussets and no pleats. End-seal bags, being made from seamless tubings, are lay-flat bags. So too are the side-seal bags, L-seal bags, backseamed bags, and pouches described above.

Films in accordance with the present invention were produced using the process schematically illustrated in Figure 1. In the process illustrated in Figure 1, solid polymer beads (not illustrated) were fed to a plurality of extruders 28 (for simplicity, only one extruder is illustrated). Inside extruders 28, the polymer beads were forwarded, melted, and degassed, following which the resulting bubble-free melt was forwarded into die head 30, and extruded through an annular die, resulting in tubing 32 which was from about 23 to about 30 mils in total thickness.

After cooling or quenching by water spray from cooling ring 34, tubing 32 was collapsed by pinch rolls 36, and was thereafter fed through irradiation vault 38 surrounded by shielding 40, where tubing 32 was irradiated with high energy electrons (i.e., ionizing radiation) from iron core transformer accelerator 42. Tubing 32 was guided through irradiation vault 38 on rolls 44. Tubing 32 was irradiated to a level of about 64 kiloGrays.

After irradiation, irradiated tubing 46 was directed through pinch rolls 48, following which irradiated tubing 46 was slightly inflated, resulting in trapped bubble 50. However, at trapped bubble 50, the tubing was not significantly drawn longitudinally, as the surface speed of nip rolls 52 were about the same speed as the surface speed of nip rolls 48. Furthermore, irradiated tubing 46 was inflated only enough to provide a substantially circular tubing without significant transverse orientation, i.e., without stretching.

Slightly inflated, irradiated tape 50 was passed through vacuum chamber 54, and was thereafter forwarded through coating die 56, in a process referred to as "extrusion coating". Second tubular extrudate 58 was melt extruded from coating die 56 and coated onto slightly inflated, irradiated tape 50, to form coated tubular tape 60. Second tubular extrudate 58 included the O₂ barrier layer, which was not subjected to ionizing radiation. Further details of the above-described coating step are set forth in U.S. Patent No. 4,278,738, to BRAX et. al., which is hereby incorporated by reference thereto, in its entirety.

After irradiation and coating, coated tubular tape 60 was wound up onto windup roll 62. Thereafter, windup roll 62 was removed and installed as unwind roll 64, on a second stage in the process of making the multilayer heat-shrinkable film. Coated tubular tape 60, from unwind roll 64, was unwound and passed over guide roll 66, after which coated tubular tape 60 was passed into hot water bath tank 68 containing hot water 70. The now collapsed, irradiated, coated tubular tape 60 was submersed in hot water 70 (having a temperature of about 185°F) for a retention time of at least about 30 seconds, i.e., to bring the film up to the desired temperature for biaxial, solid state orientation. Thereafter, coated tubular tape 60 was directed through nip rollers 72 and 76, with a trapped bubble of air inside the annular film between pairs of rollers 72 and 76. Trapped bubble 74 transversely stretched coated tubular tape 60. Furthermore, while being transversely stretched, nip rollers 76 drew tubular film 60 in the longitudinal direction, as nip rollers 76 had a surface speed higher than the surface speed of nip rollers 72. As a result of the transverse stretching and longitudinal drawing, irradiated, coated biaxially-oriented multilayer tubing film 78 was produced. The coated tubular tape was stretched in a ratio of about 3:1 and drawn in a ratio of from about 3:1, for a total orientation ratio of about 9:1. While trapped bubble 74 was maintained between roller pairs 72 and 76, the upper portion of bubble 74 was collapsed by rollers 80, with the biaxially oriented, heat-shrinkable multilayer film 78 thereafter being conveyed through pinch rollers 76 and across guide roller 82, and then rolled onto wind-up roll 84. Idler roll 86 assured a good wind-up.

Turning now to various preferred embodiments of the present invention, the first ethylene/alpha-olefin copolymer has a M_{w}/Mₙ of from about 2 to about 2.5 and a density of from about 0.910 g/cc to about 0.915 g/cc, a first melting point of from about 92°C to about 107°C, and a second melting point of from about 115°C to about 120°C. The second ethylene/alpha-olefin copolymer has a density of from about 0.900 to about 0.906 g/cc. The first ethylenelalpha-olefin copolymer makes up from about 7 to 35 weight percent of the blend, and the second ethylene/alpha-olefin makes up from about 65 to about 93 weight percent of the blend. The blend makes up from about 50 to 70 weight percent of the total weight of the multilayer film. The multila film has a total free shrink at 85°C of from about 80 to about 100 percent and a peak load impact strength of from 5300 N/mm to about 6100 N/mm (from 135 to about 155 Newtons per mil).

In another preferred embodiment, the first ethylene/alpha-olefin copolymer has a M_{w}/Mₙ of from about 2.2 to about 2.4 and a density of from about 0.911 g/cc to about 0.913 g/cc, a first melting point within a range of from about 100°C to about 103°C, and a second melting point within a range of from about 116°C to about 118°C. The second ethylene/alpha-olefin copolymer has a density of from about 0.902 g/cc to about 0.904 g/cc. The first ethylene/alpha-olefin copolymer makes up from about 15 to about 25 weight percent of the blend, and the second ethylene/alpha-olefin makes up from about 75 to about 85 weight percent of the blend. The blend makes up from about 55 to about 65 weight percent of the total weight of the multilayer film. The multilayer film has a total free shrink at 85°C of from about 80 to about 90 percent and a peak load impact strength of from 5500 N/mm to about 6100 N/mm (from 140 to about 155 Newtons per mil).

The film can have an energy to break of at least 90 Joules/mm (2.3 Joules/mil), or from 90 Joules/mm to about 140 Joules/mm (from 2.3 to about 3.5 Joules/mil), or from about 100 to about 115 Joules/mm (from about 2.5 to about 2.9 Joules/mil), or from about 105 to about 115 Joules/mm (from about 2.65 to about 2.9 Joules/mil), or from about 105 to about 110 Joules/mm (from about 2.69 to about 2.84 Joules/mil).

The first ettrylene/alpha olefin copolymer can be prepared using a metallocene catalyst on a solid support. Preferably the solid support comprises silica. The Exxon Exceed^{®} copolymer is produced in this manner. Preferably the first ethylene/alpha-olefin copolymer is a linear polymer, i.e., does not have long chain branching. Preferably the first ethylene/alpha olefin copolymer is a bimodal copolymer, i.e., a copolymer having two melting points.

In a preferred embodiment, the first ethylene/alpha-olefin copolymer comprises a copolymer of ethylene and a C₄-C₂₀ alpha-olefin, or C₄-C₁₀ alpha-olefin, or C₆ to C₈ alpha-olefin. Preferably, the first copolymer comprises a copolymer of ethylene and at least one member selected from the group consisting of butene, hexene, and octene. Preferably, the first copolymer is a copolymer of ethylene and hexene.

In a preferred embodiment, the second ethylene/alpha-olefin copolymer comprises a copolymer of ethylene and a C₄-C₂₀ alpha-olefin, or C₄-C₁₀ alpha-olefin, or C₆ to C₈ alpha-olefin. Preferably, the second copolymer is a copolymer of ethylene and at least one member selected from the group consisting of butene, hexene, and octene. Preferably, the second copolymer is a copolymer of ethylene and octene.

In a preferred embodiment, the first ethylene/alpha-olefin copolymer has a melt index of from about 0.1 to about 5 g/10 min., or from about 0.5 to about 2 g/10 min., or from about 0.8 to about 1.2 g/10 min.

In a preferred embodiment, the second ethylene/alpha-olefin copolymer has a melt index of from about 0.1 to about 2 g/10 min., or from about 0.2 to about 1 g/10 min., or from about 0.4 to about 0.6 g/10 min.

In a preferred embodiment, the multilayer film has a total thickness of from about 0.005 to about 0.254 mm (from about 0.2 mil to about 10 mils), or from about 0.025 to about 0.127 mm (from about 1 to about 5 mils), or from about 0.038 to about 0.090 mm (from about 1.5 to about 3.5 mils), or from about 0.051 to about 0.076 mm (from about 2 to about 3 mils), or from about 0.051 to about 0.069 mm (from about 2 to about 2.7 mils).

In a preferred embodiment, the second layer serves as an O₂-barrier layer, with the second layer comprising at least one member selected from the group consisting of ethylene/vinyl alcohol copolymer, polyvinyl chloride, polyvinylidene chloride, polyamide, polyester, polyacrylonitrile. Preferably the polyvinylidene chloride comprises polyvinylidene chloride/methyl acrylate copolymer and/or polyvinylidene chloride/vinyl chloride copolymer.

In a preferred embodiment, the multilayer film further comprises a third layer which serves as a seal layer, the third layer being an outer layer, with the first layer being between the third layer and the second layer.

In a preferred embodiment, the multilayer film further comprises a fourth layer which is a second outer layer, with the second layer being between the first layer and the fourth layer.

In a preferred embodiment, the multilayer film further comprises a fifth layer which is between the fourth layer and the second layer, the fifth layer containing a polymeric composition in accordance with the blend of the first layer of the film.

In a preferred embodiment, the multilayer film further comprises a sixth layer between the second layer and the first layer, the sixth layer serving as a first tie layer, and a seventh layer between the second layer and the fifth layer, the seventh layer serving as a second tie layer.

The substrate portion of the multilayer film of the present invention is irradiated while in the tape form (i.e., before solid state orientation) to induce crosslinking, i.e., to form a crosslinked polymer network. At least one surface of the film can also be corona treated to roughen the surface. In the irradiation process, the film is subjected to an energetic radiation treatment, such as corona discharge, plasma, flame, ultraviolet, X-ray, gamma ray, beta ray, and high energy electron treatment, which induce cross-linking between molecules of the irradiated material. The irradiation of polymeric films is disclosed in U.S. Patent No. 4,064,296, to BORNSTEIN, et al, which is hereby incorporated in its entirety, by reference thereto. BORNSTEIN, et al discloses the use of ionizing radiation for crosslinking the polymer present in the film.

Radiation dosages are referred to herein in terms of the radiation unit "RAD", with one million RADS, also known as a megarad, being designated as "MR", or, in terms of the radiation unit kiloGray (kGy), with 10 kiloGray representing 1 MR, as is known to those of skill in the art. A suitable radiation dosage of high energy electrons is in the range of up to about 16 to 166 kGy, more preferably about 40 to 90 kGy, and still more preferably, 55 to 75 kGy. Preferably, irradiation is carried out by an electron accelerator and the dosage level is determined by standard dosimetry processes. Other accelerators such as a van der Graaf or resonating transformer may be used. The radiation is not limited to electrons from an accelerator since any ionizing radiation may be used.

The film of the present invention may optionally be subjected to corona treatment. As used herein, the phrases "corona treatment" and "corona discharge treatment" refer to subjecting the surfaces of thermoplastic materials, such as polyolefins, to corona discharge, i.e., the ionization of a gas such as air in close proximity to a film surface, the ionization being initiated by a high voltage passed through a nearby electrode, and causing oxidation and other changes to the film surface, such as surface roughness.

Corona treatment of polymeric materials is disclosed in U.S. Patent No. 4,120,716, to BONET, issued October 17, 1978, herein incorporated in its entirety by reference thereto, discloses improved adherence characteristics of the surface of polyethylene by corona treatment, to oxidize the polyethylene surface. U.S. Patent No. 4,879,430, to HOFFMAN, discloses the use of corona discharge for the treatment of plastic webs for use in meat cook-in packaging, with the corona treatment of the inside surface of the web to increase the adhesion of the meat to

the proteinaceous material. Plasma treatment of the film may also be used. The polymer components used to fabricate multilayer films according to the present invention may also contain appropriate amounts of other additives normally included in such compositions. These include slip agents such as talc, antioxidants, fillers, dyes, pigments and dyes, radiation stabilizers, antistatic agents, elastomers, and the like additives known to those of skill in the art of packaging films.

The invention is illustrated by the following examples ("Working Examples"), which are provided for the purpose of representation, and are not to be construed as limiting the scope of the invention. Unless stated otherwise, all percentages, parts, etc. are by weight In each of Tables 1 through 9, the layer thicknesses (provided in mils) represent the thickness of the layer in the tape. The total film thickness of each of the resulting multilayer films, i.e., after solid state orientation, is provided in Table 11. In each of Tables 1 through 9, the layers to the left of the double line are referred to as the "substrate" layers, and were extruded from extruders 28 in Figure 1. The substrate layers were irradiated in irradiation vault 38. In contrast, the four layers to the right of the double line in each of Tables 1 through 9 are referred to as the "coating layers", and were extrusion coated onto the substrate layers by coating die 56 in Figure 1.

**Table 1**

| Comparative Example No. 1 | | | | | | |
|---|---|---|---|---|---|---|
| Sealant | Substrate core | Tie | Barrier | Tie | Coating Core | Outer |
| 60% SSPE1 | 60% LLDPE2 | EVA | PVDC | EMA | LLDPE2 | 80% SSPE2 |
| 40% LLDPE1 | 40% LLDPE23 | | | | | 20% LLDPE3 |
| 0.127 mm (5 mils) | 0.356 mm (14 mils) | 0.025 mm (1 mils) | 0.051 (2 mils) | 0.025 mm (1 mils) | 0.076 mm (3 mils) | 0.051 (2 mils) |

**Table 2**

| Comparative Example No. 2 | | | | | | |
|---|---|---|---|---|---|---|
| Sealant | Substrate core | Tie | Barrier | Tie | Coating Core | Outer |
| 80% SSPE1 | 80% LLDPE2 | EVA | PVDC | EMA | LUDPE2 | 85% SSPE2 |
| 20% LLDPE1 | 20% LLDPE3 | | | | | 15% LLDPE3 |
| 0.127 mm (5 mils) | 0.223 mm (9 mils) | 0.025 mm (1 mils) | 0.051 mm (2 mils) | 0.025 mm (1 mils) | 0.076 mm (3 mils) | 0.051 (2 mils) |

**Table 3**

| Comparative Example No. 3 | | | | | | |
|---|---|---|---|---|---|---|
| Sealant | Substrate core | Tie | Barrier | Tie | Coating Core | Outer |
| 90% SSPEI | 100% SSPE3 | EVA | PVDC | EVA | 100% SSPE3 | 80% SSPE2 |
| 10% LLDPE1 | | | | | | 20% LLDPE4 |
| 0.127 mm (5 mils) | 0.305 mm (12 mils) | 0.025 mm (1 mils) | 0.051 mm (2 mils) | 0.025 mm (1 mils) | 0.076 mm (3 mils) | 0.051 mm (2 mils) |

**Table 4**

| Comparative Example No.4 | | | | | | |
|---|---|---|---|---|---|---|
| Sealant | Substrate core | Tie | Barrier | Tie | Coating Core | Outer |
| 80% SSPE1 | 100% | EVA | PVDC | EVA | 100% LLDPE5 | 80% SSPE2 |
| 20% LLDPE1 | LLDPE25 | | | | | 20% LLDPE4 |
| 0.127 mm (5 mils) | 0.356 mm (14 mils) | 0.025 mm (1 mils) | 0.051 mm (2 mils) | 0.025 mm (1 mils) | 0.076 mm (3 mils) | 0.051 mm (2 mils) |

**Table 5**

| Working Example No. 1 | | | | | | |
|---|---|---|---|---|---|---|
| Sealant | Substrate core | Tie | Barrier | Tie | Coating Core | Outer |
| 80% SSPE1 | 80% LLDPE5 | EVA | PVDC | EVA | 80% LLDPE5 | 80% SSPE2 |
| 20% LLDPE1 | 20% SSPE3 | | | | 20% SSPE3 | 20% LLDPE4 |
| 0.127 mm (5 mil) | 0.356 mm (14 mil) | 0.025 mm (1 mil) | 0.051 mm (2 mil) | 0.025 mm (1 mil) | 0.076 mm (3 mil) | 0.051 mm (2 mils) |

**Table 6**

| Working Example No.2 | | | | | | |
|---|---|---|---|---|---|---|
| Sealant | Substrate core | Tie | Barrier | Tie | Coating Core | Outer |
| 80% SSPE1 | 90% LLDPE5 | EVA | PVDC | EVA | 90% LLDPE5 | 80% SSPE2 |
| 20% LLDPE1 | 10% SSPE3 | | | | 10% SSPE3 | 20% LLDPE4 |
| 0.127 mm (5 mils) | 0.356 mm (14 mils) | 0.025 (1 mil) | 0.051 mm (2 mils) | 0.025 mm (1 mil) | 0.076 mm (3 mils) | 0.051 mm (2 mils) |

**Table 7**

| Working Example No. 2 | | | | | | |
|---|---|---|---|---|---|---|
| Sealant | Substrate core | Tie | Barrier | Tie | Coating Core | Outer |
| 80% SSPE1 | 70% LLDPE5 | EVA | PVDC | EVA | 70% LLDPE5 | 80% SSPE2 |
| 20% LLDPE1 | 30% SSPE3 | | | | 30% SSPE3 | 20% LLDPE4 |
| 0.127 mm (5 mil) | 0.356 mm (14 mil) | 0.025 mm (1 mil) | 0.051 mm (2 mil) | 0.025 mm (1 mil) | 0.076 mm (3 mil) | 0.051 mm (2 mils) |

**Table 8**

| Comparative Example No. 5 | | | | | | |
|---|---|---|---|---|---|---|
| Sealant | Substrate core | Tie | Barrier | Tie | Coating Core | Outer |
| 80% SSPE1 | 90% LLDPE7 | EVA | PVDC | EVA | 90% LLDPE7 | 80% SSPE2 |
| 20% LLDPE1 | 10% SSPE4 | | | | 10% SSPE4 | 20% LLDPE3 |
| 0.127 mm (5 mil) | 0.356 mm (14 mil) | 0.025 mm (1 mil) | 0.051 mm (2 mil) | 0.025 mm (1 mil) | 0.076 mm (3 mil) | 0.051 mm (2 mils) |

**Table 9**

| Comparative Example No. 6 | | | | | | |
|---|---|---|---|---|---|---|
| Sealant | Substrate core | Tie | Barrier | Tie | Coating Core | Outer |
| 80% SSPE1 | 80% LLDPE3 | EVA | PVDC | EVA | 80% LLDPE3 | 85% SSPE2 |
| 20% LLDPE1 | 20% SSPE5 | | | | 20% SSPE5 | 15% LLDPE3 |
| 0.127 mm (5 mil) | 0.223 mm (9 mil) | 0.025 mm (1 mil) | 0.051 mm (2 mil) | 0.025 mm (1 mil) | 0.076 mm (3 mil) | 0.051 mm (2 mils) |

Table 10, below, identifies the resins set forth in Tables 1 through 9.

**Table 10**

| Resin code | Resin Identity | Density (g/cm³) | Melt Index (g/10min) |
|---|---|---|---|
| SSPE1 | Dow Affinity PL 1280 | 0.9 | 6 |
| SSPE2 | Dow Affinity PL 1850G | 0.902 | 3 |
| SSPE3 | Exxon Exceed 1012 | 0.912 | 1.0 |
| SSPE4 | Dow Affinity EG8150G | 0.868 | 0.50 |
| SSPE5 | Dow DPF1150.03 | 0.901 | 0.90 |
| LLDPE1 | Exxon Escorene LL 3003.32 | 0.9175 | 3.2 |
| LLDPE2 | Dow Attane 4203 | 0.905 | 0.8 |
| LLDPE3 | Dow Dowlex 2045 | 0.92 | 1.1 |
| LLDPE4 | Dow XUS 61528.54 ethylene/ octene copolymer | 0.917 | 0.5 |
| LLDPE5 | Dow XUS 61520.15L ethylene/octene copolymer | 0.903 | 0.5 |
| LLDPE6 | Ingenia 1062 antiblock/slip concentrate | 0.920 | 2.0 |
| LLDPE7 | Dow XU61509.32 | 0.911 | 0.50 |

Table 11 provides various physical property measurement results for the films of Tables 1 through 9. The physical property values in Table 11 have been normalized for thickness.

**Table 11**

| Example Identity | Total film gauge mm (mils) | Impact Strength : Peak Load N/mm (N/mil) | Impact Strength : Energy to Break J/mm (J/mil) | Percent Longitudinal Free Shrink at 85°C (185°F) | Percent Transverse Free Shrink at 85 °C (185°F) | Single site poly-ethylene in core layer (wt %) | Melt point(s) (°C) core layer ssPE |
|---|---|---|---|---|---|---|---|
| Comparative Example No. 1 | 0.076 (3.0) | 4409 (112) | 82.3 (2.09) | 23 | 38 | 0 | N/A |
| Comparative Example No. 2 | 0.069 (2.7) | 4921 (125) | 85.8 (2.18) | 29 | 41 | 0 | N/A |
| Comparative Example No. 3 | 0.069 (2.7) | 5511 (140) | 93.3 (2.37) | 21 | 37 | 100 | 101.5 and 115.7 |
| Comparative Example No. 4 | 0.069 (2.7) | 5000 (127) | 88.6 (2.25) | 40 | 52 | 0 | N/A |
| Working Example No. 1 | 0.069 (2.7) | 5905 (150) | 111.8 (2.84) | 38 | 49 | 20 | 101.5 and 115.7 |
| Working Example No. 2 | 0.069 (2.7) | 5511 (140) | 105.9 (2.69) | 39 | 50 | 30 | 101.5 and 115.7 |
| Working Example No. 3 | 0.069 (2.7) | 5748 (146) | 108.3 (2.75) | 36 | 46 | 10 | 101.5 and 115.7 |
| Comparative Example No. 5 | 0.069 (2.7) | 5118 (130) | 83.9 (2.13) | 29 | 43 | 10 | 56 |
| Comparative Example No. 6 | 0.056 (2.2) | 4921 (125) | 78.7 (2.0) | 25 | 33 | 20 | 98 |

| | | | | | | | |
|---|---|---|---|---|---|---|---|
| ssPE = single site catalyzed ethylene/alpha-olefin copolymer | | | | | | | |

The data in Table 11 shows that Working Examples 1, 2, and 3 exhibited a combination of total free shrink, impact strength, and energy to break higher than any of Comparative Examples 1-6. The multilayer films of the various comparative examples are structurally and compositionally similar enough to the working examples that the improved combination of shrink and abuse resistance of the working examples can be attributed to the presence of the blend in the films of the working examples.

Compared with the Working Examples, Comparative Examples 1 and 2 exhibited lower shrink and lower impact strength. In actual use, both Comparative Example 1 and Comparative Example 2 exhibited higher leaker rates than any of the Working Examples which were tested against Comparative Examples 1 and 2.

Comparative Example 3 exhibited excellent abuse properties, but did not have the high shrink properties of the Working Examples. In contrast, Comparative Example 4 exhibited excellent shrink properties, but did not exhibit the abuse properties of the Working Example. The impact and shrink results for Comparative Examples 3 and 4 are notable for the additional reason that Comparative Examples 3 and 4 each have core layers made from 100% of one of the blend components in the working examples. Thus, the presence of either of the blend components, without the other, did not produce the combination of shrink and impact of the films of the present invention.

Comparative Examples 5 and 6 were similar to the working examples except that the blends therein contained a homogeneous single site catalyzed ethylene copolymer (i.e., "ss" catalyzed ethylene copolymer) having a density lower than the density of the homogeneous copolymer in the blend in the films of the Working Examples. As a result, it can be seen that the impact strengths of the films of Comparative Examples 5 and 6 were lower than the impact strength of the films of the Working Examples. Moreover, when tested under actual packaging conditions, the films of Comparative Examples 5 and 6 exhibited significant edge tearing.

Although the present invention has been described in connection with the preferred embodiments, it is to be understood that modifications and variations may be utilized without departing from the principles and scope of the invention, as those skilled in the art will readily understand. Accordingly, such modifications may be practiced within the scope of the following claims.

## Claims

1. A multilayer film comprising a first layer comprising a blend of:
(1) a first ethylene/alpha-olefin copolymer having a M_{w}/Mₙ of from 1 to 3.0 and a density of from 0.91 g/cc to 0.925 g/cc, the first ethylene/alpha-olefin copolymer having a first melting point of from 85°C to 110°C and a second melting point of from 111°C to 125°C; and
(2) a second ethylene/alpha-olefin copolymer having an Mw/Mn greater than 3.0 and a density of from 0.90 to 0.91 g/cc;
wherein the first ethylene/alpha-olefin copolymer comprises from 5 to 40 weight percent of the blend, and the second ethylene/alpha-olefin comprises from 60 to 95 weight percent of the blend, and wherein the total amount of the blend in the first layer and in any other layers of the film comprises from 40 to 99 weight percent of the total weight of the multilayer film, with the multilayer film having a total free shrink at 85°C as determined by ASTM D 2732 of at least 60 percent and a peak load impact strength of at least 5300 N/mm (135 Newtons per mil), with the multilayer film further comprising a second layer comprising a thermoplastic polymer.

2. The multilayer film according to Claim 1, wherein the film has an energy to break of at least 90 Joules/mm (2.3 Joules/mil).

3. The multilayer film according to Claim 1, wherein the first ethylene/alpha-olefin copolymer has a melt index of from 0.1 to 5 g/10 min.

4. The multilayer film according to Claim 1, wherein the film has a total thickness of from 0.005 mm (0.2 mil) to 0.254 mm (10 mils).

5. The multilayer film according to Claim 1, wherein the second layer serves as an O₂-barrier layer, the second layer comprising at least one member selected from the group consisting of ethylene/vinyl alcohol copolymer, polyvinyl chloride, polyvinylidene chloride, polyamide, polyester, polyacrylonitrille.

6. The multilayer film according to Claim 5, further comprising a third layer which serves as a seal layer, the third layer being an outer layer, with the first layer being between the third layer and the second layer.

7. The multilayer film according to Claim 6, further comprising a fourth layer which is a second outer layer, with the second layer being between the first layer and the fourth layer.

8. The multilayer film according to Claim 7, further comprising a fifth layer which is between the fourth layer and the second layer, the fifth layer containing a polymeric composition in accordance with the blend of the first layer.

9. The multilayer film according to Claim 8, further comprising:
(A) a sixth layer between the second layer and the first layer, the sixth layer serving as a first tie layer; and
(B) a seventh layer between the second layer and the fifth layer, the seventh layer serving as a second tie layer.

10. A bag made from a multilayer film according to any one of claims 1 - 9, the multilayer film being sealed to itself and further having a second layer.

## Patentansprüche

1. Mehrschichtige Folie, umfassend eine erste Schicht, die eine Mischung aus Folgendem umfasst:
(1) einem ersten Ethylen-Alpha-Olefin-Copolymer mit einem Mw/Mn zwischen 1 und 3,0 und einer Dichte zwischen 0,91 g/cm³ und 0,925 g/ cm³, wobei das erste Ethylen-Alpha-Olefin-Copolymer einen ersten Schmelzpunkt zwischen 85 °C und 110 °C und einen zweiten Schmelzpunkt zwischen 111 °C und 125 °C aufweist; und
(2) einem zweiten Ethylen-Alpha-Olefin-Copolymer mit einem Mw/Mn größer als 3,0 und einer Dichte zwischen 0,90 und 0,91 g/ cm³,
wobei das erste Ethylen-Alpha-Olefin-Copolymer zwischen 5 und 40 Gewichtprozent der Mischung umfasst und das zweite Ethylen-Alpha-Olefin-Copolymer zwischen 60 und 95 Gewichtsprozent der Mischung umfasst, und wobei die Gesamtmenge der Mischung in der ersten Schicht und in jeglichen anderen Schichten der Folie zwischen 40 und 99 Gewichtsprozent des Gesamtgewichts der mehrschichtigen Folie umfasst, wobei die mehrschichtige Folie bei 85 °C eine gesamte freie Schrumpffähigkeit von mindestens 60 Prozent, wie durch ASTM D2732 bestimmt, und eine Schlagbeständigkeit bei einer Spitzenbelastung von mindestens 5300 N/mm (135 Newtons pro mil) aufweist, wobei die mehrschichtige Folie des Weiteren eine zweite Schicht umfasst, die ein thermoplastisches Polymer umfasst.

2. Mehrschichtige Folie nach Anspruch 1, wobei die Folie eine Bruchenergie von mindestens 90 Joules/mm (2,3 Joules/mil) hat.

3. Mehrschichtige Folie nach Anspruch 1, wobei das erste Ethylen-Alpha-Olefin-Copolymer einen Schmelzindex zwischen 0,1 und 5 g/10 Min. aufweist.

4. Mehrschichtige Folie nach Anspruch 1, wobei die Folie eine Gesamtdicke zwischen 0,005 mm (0,2 mil) und 0,254 mm (10 mil) aufweist.

5. Mehrschichtige Folie nach Anspruch 1, wobei die zweite Schicht als eine O₂-Barriereschicht dient und mindestens ein Element umfasst, das aus der Gruppe ausgewählt ist, die besteht aus: Ethylen-Vinylalkohol-Copolymer, Polyvinylchlorid, Polyvinylidenchlorid, Polyamid, Polyester, Polyacrylnitril.

6. Mehrschichtige Folie nach Anspruch 5, des Weiteren umfassend eine dritte Schicht, die als Siegelschicht dient und eine Außenschicht ist, wobei die erste Schicht zwischen der dritten Schicht und der zweiten Schicht liegt.

7. Mehrschichtige Folie nach Anspruch 6, des Weiteren umfassend eine vierte Schicht, die eine zweite Außenschicht ist, wobei die zweite Schicht zwischen der ersten Schicht und der vierten Schicht liegt.

8. Mehrschichtige Folie nach Anspruch 7, des Weiteren umfassend eine fünfte Schicht, die zwischen der vierten Schicht und der zweiten Schicht liegt, wobei die fünfte Schicht eine polymerische Zusammensetzung in Übereinstimmung mit der Mischung der ersten Schicht enthält.

9. Mehrschichtige Folie nach Anspruch 8, des Weiteren umfassend:
(A) eine sechste Schicht zwischen der zweiten Schicht und der ersten Schicht, wobei die sechste Schicht als eine erste Bindungsschicht dient; und
(B) eine siebte Schicht zwischen der zweiten Schicht und der fünften Schicht, wobei die siebte Schicht als eine zweite Bindungsschicht dient.

10. Tasche, hergestellt aus einer mehrschichtigen Folie nach einem der vorhergehenden Ansprüche 1 bis 9, wobei die mehrschichtige Folie sich selbst versiegelt und des Weiteren eine zweite Schicht aufweist.

## Revendications

1. Film multicouche comprenant une première couche comprenant le mélange suivant :
(1) un premier copolymère d'éthylène/alpha-oléfine présentant une M_{w}/Mₙ comprise entre 1 et 3,0 et une masse volumique de 0,91 g/cm³ à 0,925 g/cm³, le premier copolymère d'éthylène/alpha-oléfine présentant un premier point de fusion de 85 °C à 110 °C et un second point de fusion de 111 °C à 125°C; et
(2) un second copolymère d'éthylène/alpha-oléfine présentant une M_{w}/Mₙ supérieure à 3,0 et une masse volumique de 0,90 g/cm³ à 0,91 g/cm³ ;
où le premier copolymère d'éthylène/alpha-oléfine constitue 5 à 40 pour cent en poids du mélange et le second copolymère d'éthylène/alpha-oléfine constitue 60 à 95 pour cent en poids du mélange, et où la quantité totale du mélange dans la première couche et dans toute autre couche du film constitue 40 à 99 pour cent en poids du poids total du film multicouche, le film multicouche présentant un retrait libre total à 85 °C tel que déterminé par la norme ASTM D 2732 d'au moins 60 pour cent et une résistance au choc de charge maximale d'au moins 5 300 N/mm (135 Newton par mil), le film multicouche comportant en outre une deuxième couche comprenant un polymère thermoplastique.

2. Film multicouche selon la revendication 1, où le film présente une énergie de rupture d'au moins 90 Joules/mm (2,3 Joules/mil).

3. Film multicouche selon la revendication 1, où le premier copolymère d'éthylène/alpha-oléfine présente un indice de fusion de 0,1 à 5 g/10 min.

4. Film multicouche selon la revendication 1, où le film présente une épaisseur totale de 0,005 mm (0,2 mil) à 0,254 mm (10 mil).

5. Film multicouche selon la revendication 1, où la deuxième couche sert de couche barrière contre l'O₂, la deuxième couche comprenant au moins un élément choisi dans le groupe constitué par un copolymère d'éthylène/alcool vinylique, le polychlorure de vinyle, le polychlorure de vinylidène, le polyamide, le polyester, le polyacrylonitrile.

6. Film multicouche selon la revendication 5, comprenant en outre une troisième couche qui sert de couche de scellage, la troisième couche étant une couche externe, la première couche se situant entre la troisième couche et la deuxième couche.

7. Film multicouche selon la revendication 6, comprenant en outre une quatrième couche qui est une seconde couche externe, la deuxième couche se situant entre la première couche et la quatrième couche.

8. Film multicouche selon la revendication 7, comprenant en outre une cinquième couche qui se situe entre la quatrième couche et la deuxième couche, la cinquième couche contenant une composition polymère conformément au mélange de la première couche.

9. Film multicouche selon la revendication 8, comprenant en outre :
(A) une sixième couche entre la deuxième couche et la première couche, la sixième couche servant de première couche de liaison ; et
(B) une septième couche entre la deuxième couche et la cinquième couche, la septième couche servant de seconde couche de liaison.

10. Sachet fabriqué à partir d'un film multicouche selon l'une quelconque des revendications 1 à 9, le film multicouche étant scellé à lui-même et comprenant en outre une deuxième couche.
